# EUROPÄISCHE PATENTSCHRIFT

(11) **EP 2 197 693 B1**
(45) Veröffentlichungstag und Bekanntmachung des Hinweises auf die Patenterteilung: **03.08.2011**
(21) Anmeldenummer: 08802790.9
(22) Anmeldetag: 06.10.2008
(51) Int. Cl.: B60B 7/04, B62B 9/12, B62B 9/20, B62B 7/14, B62B 9/02

(54) **KINDERWAGEN**
STROLLER
POUSSETTE D'ENFANT

(30) Priorität: 04.10.2007 DE 102007047578
(43) Veröffentlichungstag der Anmeldung: 23.06.2010
(73) Patentinhaber: Ponticelli, Pius, 4616 Kappel (CH)
(72) Erfinder: Ponticelli, Pius, 4616 Kappel (CH)
(74) Vertreter: Arat, Dogan
(86) Internationale Anmeldenummer: PCT/EP2008/008414
(87) Internationale Veröffentlichungsnummer: WO 2009/043596

(56) Entgegenhaltungen:
- EP-A1- 1 352 803
- EP-A2- 1 764 281
- WO-A-2005/054031
- DE-U1- 20 112 583
- DE-U1-202006 012 430
- GB-A- 2 430 414
- US-A- 5 772 279
- US-A1- 2006 237 932

## Beschreibung

Die Erfindung betrifft eine Vorrichtung zum Bewegen eines Kindes, Säuglings od. dgl. mit einem Gestellrahmen, an welchem ein Sitz, ein Hand- und Schiebegriff sowie zumindest drei Räder angeordnet sind, wobei die Räder an Achsen angeordnet sind, wobei zumindest zwei Achsen um eine Vertikalachse bzw. eine Horizontalachse verschwenkbar sind.

### STAND DER TECHNIK

Derartige Vorrichtungen, auch als Kinderwagen bezeichnet, sind bereits in vielfältiger Form und Ausgestaltung bekannt und gebräuchlich. So ist beispielsweise in der US 2006/0237932 A1 ein Kinderwagen beschrieben, welcher mehrere Räder aufweist, welche drehbar an einem Rahmen angeordnet sind. Darüber hinaus ist mit dem Rahmen eine durchsichtige Haube zum Schutz des Kindes sowie ein Sitz zugeordnet, welcher sich über eine Teleskopstange nach oben und nach unten verstellen lässt.

Aus der DE 20 2006 012 430 U1 geht ein Fahrgestell für einen Kinderwagen, eine Kinderkarre od. dgl. mit einem aus miteinander verbundenen Streben aufgebauten Gestell hervor, an dem Gestell angeordneten Rädern, einem an dem Gestell angeordneten Griff und mit einer Anschlussvorrichtung zum Festlegen einer Kinderwagenliegeschale, eines Kinderkarrensitzes, eines Kinderautosicherheitssitzes od. dgl., wobei eine Einrichtung zum Verstellen der Höhe der Anschlussvorrichtung relativ in der Position der Räder vorgesehen ist. Die Einrichtung zum Verstellen der Höhe der Anschlussvorrichtung ist durch jeweils auf einer Seite an dem Gestell angeordneten, im wesentlichen vertikal verlaufende Führungsrohre und je ein in jedem der Führungsrohre verschiebbar und in wenigstens zwei unterschiedlichen Positionen arretierbar geführtes Innenrohr, an dessen oberen Abschnitt jeweils ein Anschlusselement als Bestandteil der Anschlussvorrichtung angeordnet ist, gebildet.

Weiterhin geht aus der EP 1 352 803 A1, welche als nächster stand der Technik angeschen wird, ein zusammenklappbarer Kinderwagen hervor. Hierbei sind ein Vorderrad und Hinterräder drehbar an einem zentralen Rahmenelement befestigt, wobei sie dabei zwischen einer Gebrauchsstellung, bei welcher die Räder unterhalb des mittigen Rahmenelementes und voneinander beabstandet angeordnet sind, und einer Transportposition bewegbar sind, bei welcher die Räder oberhalb des mittigen Rahmenelementes verschwenkt werden, wobei sich dabei der Abstand zwischen ihnen verringert.

Die DE 201 12 583 U1 offenbart einen Kinderwagen mit einem die Laufräder aufweisenden Fahrgestell, welches für den Transport zusammenklappbar ist.

Ein weiterer, für den Transport zusammenklappbarer Kinderwagen wird ferner in der WO2005/054031 A1 gezeigt.

Nachteilig bei den o. g. Vorrichtungen ist, dass die einzelnen Funktionen oftmals eines komplizierten Aufbaus der Vorrichtung bedürfen und insbesondere nicht dann anzuwenden sind, wenn sich bereits ein Kind oder Säugling in dem Kinderwagen befindet. Darüber hinaus ist es nicht möglich, die Achsen derart zu verstellen, dass der Abstand der Räder zueinander verringert wird. Auch ist ein Verschwenken der Achsen mit noch im Sitz befindlichen Kind, Säugling od. dgl. nicht möglich.

### AUFGABE DER ERFINDUNG

Aufgabe der Erfindung ist es, eine Vorrichtung der o. g. Art zu schaffen, welche die genannten Nachteile beseitigt und vielseitige Anwendungsmöglichkeiten hinsichtlich des Bewegens eines Kindes, Säuglings od. dgl. bietet. Die unterschiedlichen Funktionen sollen insbesondere auch dann einsetzbar sein, wenn sich bereits ein Kind, Säugling od. dgl. in der Vorrichtung befindet.

Darüber hinaus soll die Vorrichtung einen möglichst unkomplizierten Aufbau und folglich eine einfache Handhabung aufweisen.

### LÖSUNG DER AUFGABE

Zur Lösung der Aufgabe führt, dass die Achsen über einen Löse- und Verstellmechanismus verbunden sind und/oder dem Gestellrahmen mittig zwischen den Achsen ein Schwenkmechanismus zugeordnet ist.

Die Achsen selbst sind über Drehbolzen bzw. ein Drehgelenk an dem Gestellrahmen befestigt. Der Löse- und Verstellmechanismus weist zwei Schenkel auf, welche einends über Drehbolzen drehbar mit den Achsen und andernends über Drehbolzen drehbar mit zwei seitlichen, von einem Schubprofil abragenden Laschen verbunden sind, wobei das Schubprofil entlang von einem Raststreifen verschiebbar ist, mit der ein unteres Ende eines Rastbolzens in Eingriff gelangt. Ein oberes Ende des Rastbolzens wiederum durchquert eine Öffnung eines Betätigungshebels, wobei ein Kopf des Rastbolzens auf einer Oberseite des Betätigungshebels aufliegt, um so ein Durchrutschen des Rastbolzens nach unten zu verhindern. Der Rastbolzen ist zwischen dem Betätigungshebel und dem Raststreifen von einer Feder umfangen, welche dazu dient, den Rastbolzen nach Betätigung in seine Ausgangslage zurückzubringen.

Der Betätigungshebel ist in einer Horizontalachse drehbar an dem Schubprofil angeordnet. Durch Betätigung des Betätigungshebels wird das Schubprofil zusammen mit dem Betätigungshebel und dem Rastbolzen in Richtung eines Aussenrohres des Gestellrahmens verschoben. Dabei fährt eine Sperrgabel des Schubprofils, die in Richtung auf das Aussen- und ein darin angeordnetes Innenrohr von dem Schubprofil abragt, durch entsprechende Ausnehmungen des Aussen- und Innenrohres in das Innere des Innenrohres ein. Die Ausnehmungen des Innenrohres befinden sich dabei in einer Höhe des Innenrohres, in welcher es nahezu vollständig in das Aussenrohr eingefahren ist und sich der damit verbundene Sitz in seiner untersten Stellung befindet. Das Innenrohr kann nun nicht mehr in dem Aussenrohr bewegt werden. Auf diese Weise wird eine Höhenverstellung des Sitzes blockiert, solange die Achsen nach innen geschwenkt sind, da die Vorrichtung ansonsten instabil zu werden droht und nicht der Norm entspricht.

Soll stattdessen der Sitz erneut in seiner Höhe verstellt werden können, muss dieser Bewegungsablauf lediglich rückgängig gemacht werden und die Achsen in ihre Ausgangslage gebracht werden.

Darüber hinaus kann die Sperrgabel mit einem Sperrbolzen in Wirkverbindung stehen, so dass ein Sitz nicht in entgegengesetzter Fahrtrichtung angebracht werden kann, wenn die Achsen nach innen geschwenkt sind. Auch hiermit wird verhindert, dass die Vorrichtung instabil zu werden droht und nicht mehr der Norm entspricht. Der Sperrbolzen wird hierzu einends von der Sperrgabel in einer gewissen Höhe gehalten. Andernends weist der Sperrbolzen einen Kopf auf, welcher hierdurch über ein Anschlussstück zwischen Sitz und Innenrohr ragt und dann, wenn der Sitz entgegen der Fahrtrichtung angebracht werden soll, mit einem Sperrbolzen an dem Sitz zusammenwirkt und eine Montage verhindert. Bei Montage in Fahrtrichtung hingegen fährt der Kopf des Sperrbolzens trotz eingeschwenkten Achsen in einen entsprechenden Freiraum des Sitzes ein, so dass dieser montiert werden kann.

Mit Hilfe des Löse- und Verstellmechanismus können die Schenkel derart verstellt werden, dass die Achsen zusammen mit ihren Rädern einfach nach innen bzw. nach aussen gestellt werden können. Werden die Achsen nach innen verstellt, geschieht dies vorzugsweise nur soweit, dass die Räder weiterhin selbständig drehen können, ohne sich gegenseitig zu behindern.

Weitere Möglichkeiten des Verschwenkens der beiden Achsen sowie eine mögliche gleichzeitige Verriegelung der Höhenverstellung des Sitzes und/oder das gleichzeitige Verhindern der Montage des Sitzes entgegen der Fahrtrichtung sollen von der vorliegenden Erfindung umfass sein. So ist insbesondere die Ausgestaltung der Sperrgabel, des Schubprofils, des Sperrbolzens sowie weiterer Elemente von untergeordneter Bedeutung. Wichtig ist das Zusammenspiel der einzelne Elemente und die sich daraus ergebende Wirkung.

Die Vorsehung des Schwenkmechanismus, um insbesondere die hinteren Achsen in Richtung der vorderen Achsen zu verschwenken, dient der Vereinfachung von beispielsweise dem Treppensteigen oder Befahren von Kies od. dgl.. Insbesondere soll vorgesehen sein, dass hierbei ein Kind, Säugling od. dgl. in dem Sitz sitzen bleiben kann und für derartige Bewegungsabläufe nicht herausgenommen werden muss.

Der Schwenkmechanismus ist hierzu mittig zwischen den hinteren Achsen des Gestellrahmens angeordnet und weist ein dreieckförmiges Betätigungselement auf. Dieses Betätigungselement gelangt mit einem Schwenkelement in Eingriff, welches wiederum über eine Drehachse mit den Achsen in Verbindung steht. Durch Betätigung beispielsweise eines Seilzuges am Hand- und Schiebegriff gelangt das dreieckförmige Betätigungselement aus dem Eingriff mit dem Schwenkelement, wodurch dieses um eine Horizontalachse schwenken kann und dabei die Drehachsen bzw. die an ihr befestigten Achsen mit ihren Rädern mitnimmt. Ein Stift an dem Schwenkelement begrenzt dabei die Schwenkbewegung des Schwenkelementes durch seine Führung in einem Langloch einer Verbindungsscheibe, welche wiederum mit dem Gestellrahmen befestigt ist.

Die Ausgestaltung des Betätigungselementes, des Schwenkelementes sowie der Verbindungsscheibe mit ihrem Langloch ist von untergeordneter Bedeutung. Wichtig ist, dass durch eine einfach Hebelbetätigung die hinteren Achsen schnell und unkompliziert in Richtung der vorderen Achsen verschwenkt werden können, wobei der Sitz trotz dieses Vorganges seine Position derart beibehält, dass das in dem Sitz befindliche Kind, Säugling od. dgl. nicht herausgenommen werden muss.

Weiterhin ist vorgesehen, den Sitz höhenverstellbar auszugestalten.

Die Position des Sitzes lässt sich auf unterschiedliche, einfache Arten realisieren. So ist der Sitz über das oben bereits erwähnte Anschlussstück mit dem Innenrohr verbunden, welches wiederum in dem Aussenrohr geführt ist, das mit dem Gestellrahmen der Vorrichtung verbunden ist. Gleichzeitig ist im Inneren des Innenrohres bzw. des Aussenrohres eine Feder angeordnet, welche sowohl an einem oberen Boden des Innenrohres als auch an einem unteren Boden des Aussenrohres befestigt ist. Je nach Spannung der Feder ist somit das Innenrohr mehr oder weniger tief in dem Aussenrohr versenkt.

Die Feder kann nun zum einen aufgrund des Gewichtes eines sich in dem Sitz befindlichen Kindes, Säuglings od. dgl. eingestellt bzw, vorgespannt werden. Damit richtet sich die Höheneinstellung des Sitzes nach dem Gewicht des Kindes. Eine bewusste Einstellung des Sitzes ist damit jedoch nicht möglich.

Es besteht jedoch die Möglichkeit, eine Schraube derart mit dem Innenrohr zu verbinden, dass das Innenrohr durch Drehung der Schraube in dem Aussenrohr hoch und runter bewegt werden kann, so dass eine gewünschte Höhe des Sitzes eingestellt werden kann.

Darüber hinaus besteht die Möglichkeit, das Innenrohr über eine Rastnase eines Betätigungshebels, welcher auf dem Aussenrohr angeordnet ist, und damit die Höhe des Sitzes in einer jeweils gewünschten Höhe festzulegen. Hierzu muss die Rastnase lediglich in entsprechende Ausnehmungen in dem Innenrohr einrasten.

Weitere Möglichkeiten der Höhenverstellung des Sitzes sind denkbar und sollen von der vorliegenden Erfindung umfasst sein. So ist es beispielsweise möglich, das Innenrohr mit einem Aussengewinde zu versehen, welches mit einem Innengewinde des Aussenrohres in Eingriff gelangt und mittels diesen nach oben bzw. nach unten gedreht werden kann, um so eine gewünschte Höhe des Sitzes zu erreichen. Auch kann, wie dies beispielsweise bei Bürostühlen der Fall ist, die Höhenverstellung über eine Gasdruckfeder erfolgen.

Um eine Drehbarkeit des Hand- und Schiebegriffes zu ermöglichen, ist diesem eine Betätigungseinrichtung zugeordnet, welche jeweils endseitig mit einem Verriegelungsbügel verbunden ist. Dieser Verriegelungsbügel weist einen Rasthaken auf, welcher mit Ausnehmungen in einen Umfang einer Drehscheibe in Wirkverbindung bringbar ist, welche die Enden des Hand- und Schiebegriffes mit dem Gestellrahmen verbindet. Durch Betätigen der Betätigungseinrichtung wird der Rasthaken aus seiner Wirkverbindung mit den Ausnehmungen gelöst, der Hand- und Schiebegriff kann gedreht werden. Anschliessend rastet der Rasthaken erneut in den Ausnehmungen ein und legt damit den Hand- und Schiebgriff in seiner gewünschten Stellung fest.

Hier ist jedoch auch denkbar, ein zusätzliches, bevorzugt federbelastetes Element vorzusehen, dessen Betätigung die Drehung des Verriegelungsbügels und damit ein Lösen der Wirkverbindung zwischen Rasthaken und Ausnehmung initiiert, und welches über den Zug der Feder in seine Ausgangsstellung zurückgelangt. Auch kann der Rasthaken selbst direkt mit einer Feder beaufschlagt werden. Weitere Möglichkeiten sind denkbar und sollen von der vorliegenden Erfindung umfasst sein.

Neben der eben beschriebenen Drehbarkeit des Hand- und Schiebegriffes um eine Horizontalachse ist auch eine Drehung des Hand- und Schiebegriffes um eine Vertikalachse möglich. Hierzu ist dem Aussenrohr oder Innenrohr des Gestellrahmens ein Anschlussring mit einer Umfangsnut angeordnet, in welcher ein Drehring dreht, an welchem über ein Drehgelenk der Hand- und Schiebegriff angeordnet ist. Zur Drehung bzw. Festlegung des Hand- und Schiebegriffes ist diesem bzw. dem Drehring erneut ein federbelasteter Rastbolzen zugeordnet, welcher mit entsprechenden Ausnehmungen in der Umfangsnut bzw. dem Drehgelenk in Eingriff bringbar sind. Die eben beschriebene Anordnung ermöglichst sogar eine Drehung des Handgriffes um 360°.

Weitere Möglichkeiten der Drehung, Schwenkung und des Kippens des Hand- und Schiebegriffes sind denkbar und sollen von der vorliegenden Erfindung umfasst sein.

Die oben mehrfach genannten Rasteinrichtungen können jedwede bereits bekannte und übliche Rasteinrichtungen umfassen. Wichtig ist, dass sie ihre Funktion, nämlich die Festlegung der einzelnen Elemente, sicher gewährleisten.

Darüber hinaus kann die oben genannte Verbindung zwischen Sitz und Gestellrahmen unterschiedlich ausgestaltet sein. Wichtig hierbei ist, dass der Sitz mit einfachen Handgriffen von dem Gestellrahmen gelöst werden kann und andere Sitze, beispielsweise Sitze mit oder ohne Sitztiefenverstellung, mit oder ohne Wirbelsäulenunterstützung, mit oder ohne Belüftungseinsatz, Sitze, die einteilig oder mehrteilig aufgebaut sind, od. dgl. aufgesetzt werden können.

Ferner ist denkbar, neben der oben beschriebenen Möglichkeit der Schwenkbarkeit der Achsen auch die Räder einzeln kippbar auszugestalten, was insbesondere die Kurvenfahrt der Vorrichtung erleichtern kann.

Ein weiterer Vorteil der vorliegenden Erfindung ist, dass ein Grossteil der möglichen Funktionen an dem Gestellrahmen verwirklicht werden können, wodurch ein komplizierter Aufbau entfällt. Statt dessen weist die Vorrichtung quasi ein Herz auf, von dem aus alles funktioniert und geleitet werden kann. Dies gewährleistet auch, dass die Schubkraft der Vorrichtung ideal verteilt ist.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine teilweise in Explosionsdarstellung gezeigte Seitenansicht einer Vorrichtung zum Bewegen eines Kindes, Säuglings od. dgl. gemäss der vorliegenden Erfindung;
Figur 2 eine vergrössert dargestellte Seitenansicht eines Bereichs der Vorrichtung nach Figur 1;
Figur 3 eine vergrössert dargestellte Seitenansicht des Bereichs der Vorrichtung nach Figur 2 mit einem weiteren Ausführungsbeispiel einer Sitzhöhenverstellung;
Figur 4 eine Draufsicht auf die Vorrichtung nach Figur 1 mit Vorderrädern in Ausgangslage aber ohne Sitz;
Figur 5 die Draufsicht nach Figur 4 mit Vorderrädern in einer weiteren Gebrauchslage;
Figur 6 eine teilweise in Explosionsdarstellung gezeigte Seitenansicht eines weiteren Ausführungsbeispiels einer Vorrichtung zum Bewegen eines Kindes, Säuglings od. dgl. gemäss der vorliegenden Erfindung mit dreh- und schwenkbarem Griff;

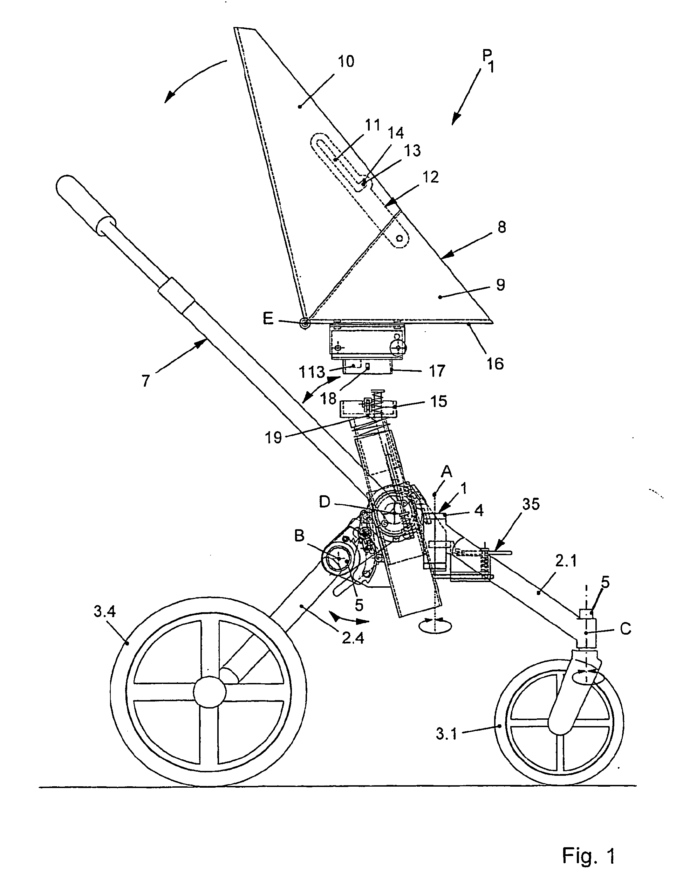

Gemäss den Figuren 1 bis 5 weist eine Vorrichtung P₁ zum Bewegen eines Kindes, Säuglings od. dgl. einen mittigen Gestellrahmen 1 auf, an welchem dreh- bzw. schwenkbar vier Achsen 2.1, 2.2, 2.3 und 2.4 angeordnet sind. Die Achsen 2.1 und 2.2 sind dabei über Drehbolzen 4 an dem Rahmengestell 1 befestigt und drehen jeweils um eine Vertikalachse A, wohingegen die beiden Achsen 2.3 und 2.4 jeweils endseits eines Drehgelenkes 5 angeordnet sind und um eine Horizontalachse B schwenken.

Die Achsen 2.1 bis 2.4 sind endseits jeweils mit zumindest einem Rad 3.1, 3.2, 3.3 und 3.4 verbunden, wobei von diesen Rädern 3.1 bis 3.4 zumindest die zwei Räder 3.1 und 3.2 um Vertikalachse C schwenkbar mit ihrer jeweiligen Achse 2.1 und 2.2 verbunden sind. Die Räder 3.1 und 3.2 sind hierzu ebenfalls über Drehbolzen 6 an den Achsen 2.1 und 2.2 befestigt.

An dem Gestellrahmen 1 ist weiterhin ein Hand- und Schiebegriff 7 angeordnet, welcher um eine mittige Horizontalachse D drehbar ist.

Darüber hinaus ist dem Gestellrahmen 1 ein höhenverstellbarer Sitz 8 zugeordnet, welcher bei dem vorliegenden Ausführungsbeispiel einen Sitzbereich 9 und einen Rückenlehnenbereich 10 aufweist. Der Rückenlehnenbereich 10 ist um eine Horizontalachse E nach hinten verschwenkbar, wobei ein in einem Langloch 11 eines Führungsstreifens 12 geführter Bolzen 13 die Bewegung des Rückenlehnenbereiches 10 nach hinten begrenzt. In Ausgangslage jedoch ist dieser Bolzen 13, welcher an dem Rückenlehnenbereich 10 angeordnet ist, in einer Rastausnehmung 14 in dem Führungsstreifen 12, welcher drehbar an dem Sitzbereich 9 angeordnet ist, gehalten.

Die Funktionsweise des vorliegenden Ausführungsbeispiels ist folgende:

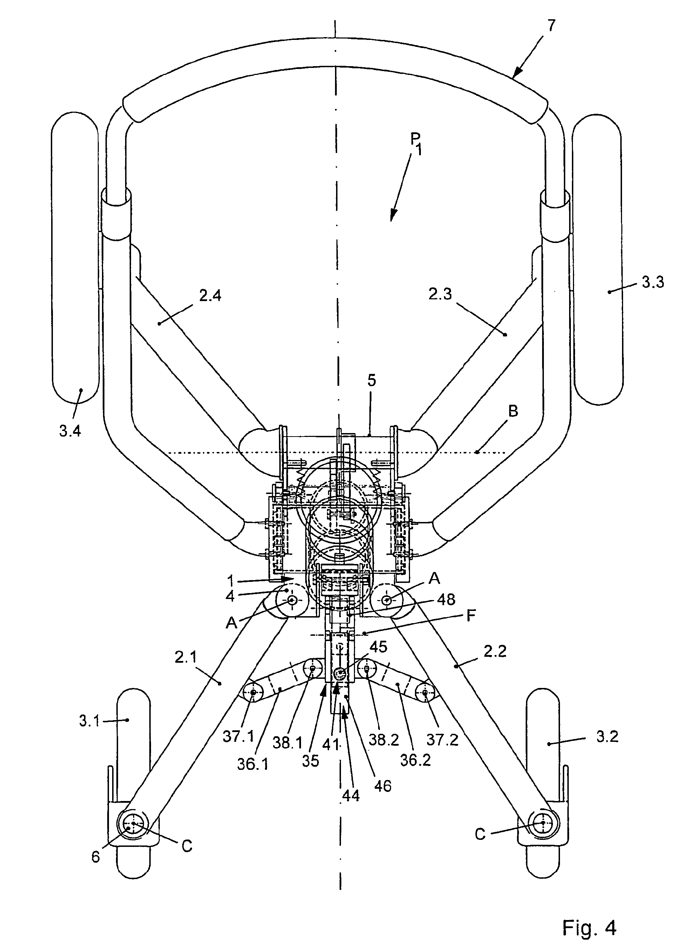

In Ausgangslage befindet sich die Vorrichtung P₁ in der in Figur 4 dargestellten Gebrauchslage, in der die Achse 2.1 und 2.2 sich in der normalen Fahrstellung befinden. D.h. die Achsen 2.1 und 2.2 sind auseinander bewegt, wodurch sich die Räder 3.1 und 3.2 etwa in einer Ebene mit den Rädern 3.3 und 3.4 befinden. Der Hand- und Schiebegriff 7 befindet sich auf Höhe der Räder 3.3 und 3.4. Lediglich der Sitz 8 muss noch mit dem Gestellrahmen 1 bzw. dem für ihn vorgesehenen Anschlussstück 15 verbunden werden. Hierzu weist der Sitz 8 auf seiner Unterseite 16 ein Rohrstück 17 mit einer Rastausnehmung 18 auf. Das Rohrstück 17 wird in das Anschlussstück 15 eingesetzt. Ein federbelasteter Hebel 19 wird nach oben bewegt und ein nicht näher gezeigtes Rastelement rastet in der Rastausnehmung 18 des Rohrstückes 17 des Sitzes 8 ein. Somit ist der Sitz 8 an dem Gestellrahmen 1 befestigt. Es kann nun ein , Säugling od. dgl. in dem Sitz 8 Platz nehmen und die Vorrichtung P1 bewegt werden.

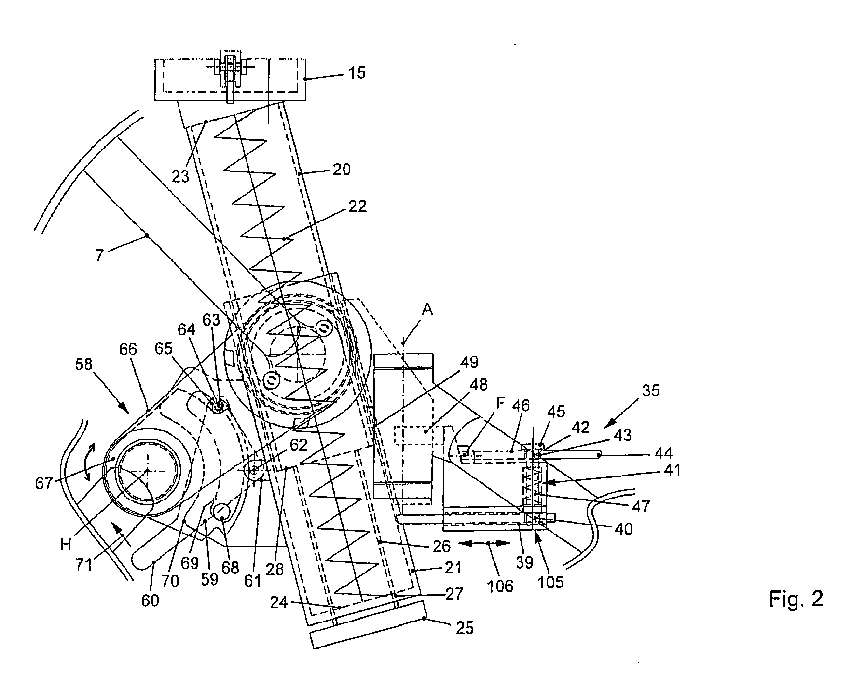

Soll nun beispielsweise der Sitz 8 in seiner Höhe verstellt werden, so gibt es verschiedene Möglichkeiten. Figur 2 zeigt eine Sitzhöhenverstellung, bei welcher das Anschlussstück 15 mit einem Innenrohr 20 verbunden ist, welches wiederum in einem Aussenrohr 21 geführt ist. Gleichzeitig ist in dem Inneren des Innenrohres 20 bzw. des Aussenrohres 21 eine Feder 22 angeordnet, welche zwischen einem oberen Boden 23 des Innenrohres 20 und einem unteren Boden 24 des Aussenrohres 21 verspannt ist. Je nach Spannung der Feder 22 ist somit das Innenrohr 20 mehr oder weniger tief in dem Aussenrohr 21 versenkt.

Die Feder 22 kann zum einen aufgrund des Gewichtes eines sich in dem Sitz 8 befindlichen Kindes, Säuglings od. dgl. eingestellt bzw. vorgespannt werden. Damit richtet sich die Höheneinstellung des Sitzes 8 nach dem Gewicht des Kindes. Eine bewusste Einstellung, beispielsweise auf die Höhe eines Tisches, an den die Vorrichtung gestellt werden soll, ist jedoch nicht möglich.

Zum anderen besteht die Möglichkeit, die Feder 22 in der Weise vorzuspannen, dass eine Schraube 25 durch eine mit einem entsprechenden Gewinde 26 versehene Öffnung 27 in dem unteren Boden 24 des Aussenrohres 21 geführt wird. Im Inneren des Aussenrohres 21 stösst diese Schraube 25 an eine Unterseite 28 des Innenrohres 20. Durch Drehung der Schraube 25 wird das Innenrohr 20 in dem Aussenrohr 21 bewegt, wobei die Bewegung des Innenrohres 20 in dem Aussenrohr 21 nach unten durch den Zug der Feder 22 unterstützt wird. Auf diese Weise kann eine bewusste Einstellung der Höhe des Sitzes 8 vorgenommen werden.

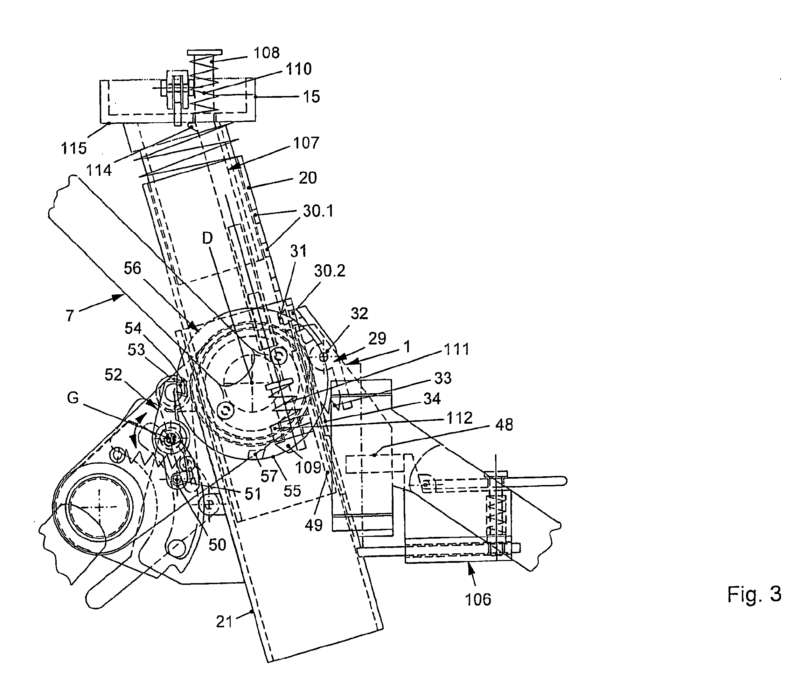

Eine weitere Möglichkeit, die Höhe des Sitzes 8 einzustellen, wird in Figur 3 dargestellt. Das Innenrohr 20 und/oder das Aussenrohr 21, je nach Länge des Aussenrohres 21 bzw. Anordnung eines Betätigungshebels 29, ist/sind in Längsrichtung mit Ausnehmungen 30.1 bzw. 30.2 durchsetzt. In diese Ausnehmungen 30.1 und 30.2 greift eine Rastnase 31 ein, welche einends eines Betätigungshebels 29 angeordnet ist. Dieser Betätigungshebel 29 weist die Form einer Wippe auf und ist mit seinem mittleren Bereich 32 drehbar an dem Gestellrahmen 1 angeordnet. An dem der Rastnase 31 des Betätigungshebels 29 gegenüberliegenden Ende stützt sich der Betätigungshebel 29 über eine Feder 33 auf einer Aussenseite 34 des Aussenrohres 21 ab.

Wird nun auf den Betätigungshebel 29 auf der anderen Seite der Feder 33 gedrückt, so wird durch die Drehung des Betätigungshebels 29 die Rastnase 31 aus ihrer jeweiligen Ausnehmung 30 in dem Innenrohr 20 und/oder dem Aussenrohr 20 gezogen. Das Innenrohr 20 und mit ihm der über das Anschlussstück 15 verbundene Sitz 8 können nach oben oder nach unten bewegt und somit eine gewünschte Höhe des Sitzes 8 eingestellt werden. Dieser Bewegungsablauf erfolgt bei jeder neuen Einstellung der Höhe des Sitzes 8.

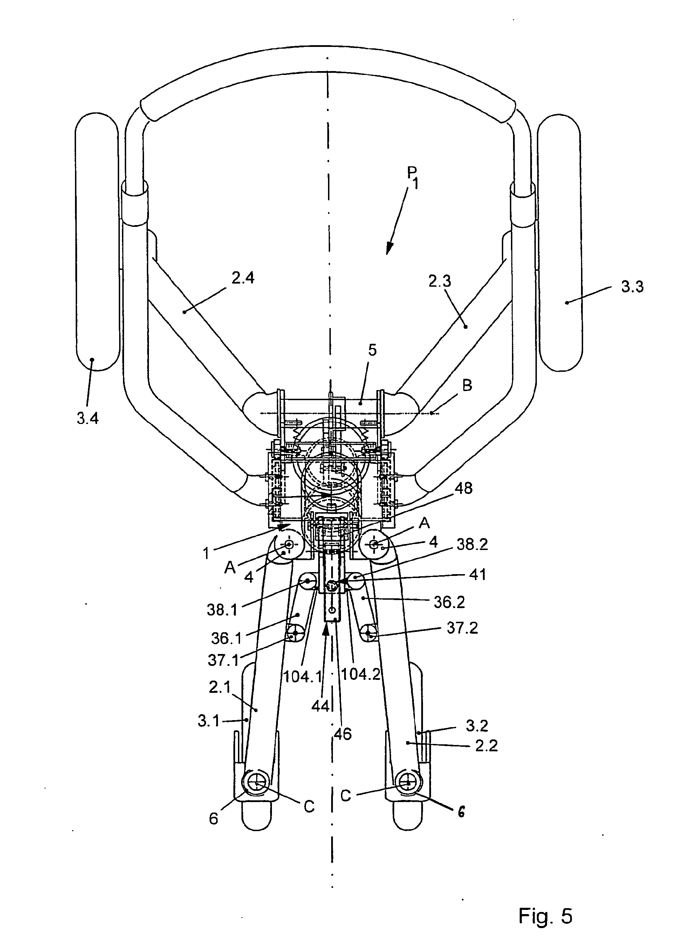

Neben der Einstellung der Höhe des Sitzes 8 kann insbesondere auch die Stellung der Räder 3.1 und 3.2 an den Achsen 2.1 und 2.2 verändert werden, wie in den Figuren 4 und 5 dargestellt. Hierzu sind die Achsen 2.1 und 2.2 über einen Löse- bzw. Verstellmechanismus 35 miteinander und mit dem Gestellrahmen 1 verbunden. Dieser Löse- und Verstellmechanismus 35 weist zwei Schenkel 36.1 und 36.2 auf, welche einends über Drehbolzen 37.1 und 37.2 drehbar mit den Achsen 2.1 und 2.2 und andernends über Drehbolzen 38.1 und 38.2 drehbar mit zwei seitlichen, von einem Schubprofil 105 abragenden Laschen 104.1 und 104.2 verbunden sind, wobei das Schubprofil 105 entlang von einem Raststreifen 39 (siehe Figur 2) in Richtung des Doppelpfeils 106 verschiebbar ist. Mit dem Raststreifen 39 gelangt ein unteres Ende 40 eines Rastbolzens 41 in Eingriff. Ein oberes Ende 42 des Rastbolzens 41 wiederum durchquert eine Öffnung 43 eines Betätigungshebels 44, wobei ein Kopf 45 des Rastbolzens 41 auf einer Oberseite 46 des Betätigungshebels 44 zu liegen kommt. Zwischen dem Betätigungshebel 44 und der Raststreifen 39 ist der Rastbolzen 41 von einer Feder 47 umfangen.

Der Betätigungshebel 44 ist drehbar um eine Horizontalachse F an dem Schubprofil 105 angeordnet. Wird nun der Betätigungshebel 44 angehoben, so dreht dieser um die Horizontalachse F. Gleichzeitig wird der Kopf 45 des Rastbolzens 41 und damit der gesamte Rastbolzen 41 nach oben gedrückt. Die Feder 47 wird von dem unteren Ende 40 des Rastbolzens 41 bzw. einer entsprechenden Scheibe vorgespannt. Damit gelangt das untere Ende 40 des Rastbolzens 41 gegen die Kraft der Feder 47 aus dem Eingriff mit dem Raststreifen 39.

Nun kann das gesamte Schubprofil 105 zusammen mit dem Betätigungshebel 44 und dem Rastbolzen 41 in Richtung des Aussenrohres 21 verschoben werden. Wird nun der Betätigungshebel 44 wieder losgelassen, entspannt sich die Feder 47, zieht über den Kopf 45 den Betätigungshebel 44 wieder nach unten und das untere Ende 40 des Rastbolzens 41 gelangt erneut mit dem Raststreifen 39 jedoch in einer anderen Position in Eingriff. In dieser Position sind die Schenkel 36.1 und 36.2 und die Achsen 2.1 und 2.2 zusammen mit den Rädern 3.1 und 3.2 einfach nach innen geschwenkt, was die Beweglichkeit der gesamten Vorrichtung wesentlich verbessert. Die Achsen 2.1 und 2.2 werden dabei nur so weit nach innen geschwenkt, dass sich die Räder 3.1 und 3.2 weiterhin drehen können.

In dieser Stellung, in welcher die Achsen 2.1 und 2.2 nach innen geschwenkt sind, muss verhindert werden, dass der Sitz 8 in seiner Höhe verstellt wird. Er soll im Gegenteil in seiner untersten Stellung verbleiben, solange die Achsen 2.1 und 2.2 nach innen geschwenkt sind, da die Vorrichtung P₁ ansonsten instabil zu werden droht und nicht der Norm entspricht. Um zu verhindern, dass der Sitz 8 versehentlich in seiner Höhe verstellt wird, gelangt eine Sperrgabel 48, die in Richtung auf das Aussen- und Innenrohr 20, 21 von dem Schubprofil 105 abragt, durch entsprechende Ausnehmungen 49 des Aussenrohres 21 bzw, des Innenrohres 20 in das Innere des Innenrohres 20. Die Ausnehmungen 49 befinden sich dabei in einer Höhe des Innenrohres 20, in welcher es nahezu vollständig in das Aussenrohr 21 eingefahren ist und sich der Sitz 8 somit in seiner untersten Stellung befindet. Das Innenrohr 20 kann nun nicht mehr in dem Aussenrohr 21 bewegt werden.

In dieser Stellung, in welcher die Achsen 2.1 und 2.2 nach innen geschwenkt sind, kann es sich weiterhin als notwendig erweisen, zu verhindern, dass der Sitz 8 entgegen der Fahrtrichtung mit dem Anschlussstück 15 verbunden wird, da die Vorrichtung P₁ ansonsten ebenfalls instabil zu werden droht und nicht der Norm entspricht. Um zu verhindern, dass der Sitz 8 mit seinem Rohrstück 17 in das Anschlussstück 15 eingesetzt wird, wird beim Verschieben des Schubprofils 105 die Sperrgabel 48, die in Richtung auf das Aussen- und Innenrohr 20, 21 von dem Schubprofil 105 abragt, durch die Ausnehmungen 49 im Aussenrohr 21 bzw. Innenrohr 20 in das Innere des Innenrohres 20 eingeschoben. In dieser Stellung wirkt die Sperrgabel 48 mit einem Sperrbolzen 107 zusammen.

Der Sperrbolzen 107 ragte in seiner Sperrlage durch den Druck der Feder 110 mit einem Kopf 108 aus dem Anschlussstück 15 heraus. Eine Nase 114 an dem Sperrbolzen 107 liegt dabei an einer Unterseite 115 des Anschlussstückes 15 an und verhindert, dass der Kopf 108 unbegrenzt aus dem Anschlussstück 15 herausschaut. Der Kopf 108 wiederum verhindert, dass das Rohrstück 17 in das Anschlussstück 15 eingesetzt wird, denn er stösst in dem Rohrstück 17 gegen einen in diesem angeordneten Sperrbalken 113.

Der Sperrbolzen 107 durchzieht weiterhin beinahe das gesamte Innenrohr 20 und trifft mit einem unteren Hakenende 109 auf die Sperrgabel 48, wenn diese durch die Ausnehmung 49 in das Innenrohr 20 eingefahren ist. Damit kann der Sperrbolzen 107 nicht nach unten verschoben werden. Erst wenn sich das Schubprofil 105 wieder in seiner Ausgangslage befindet, die in Figur 4 gezeigt ist, und in welcher die Achsen 2.1 und 2.2 gespreizt sind, wird der Sperrbolzen 107 freigegeben und der Kopf 108 kann dem Druck eines eingesetzten Rohrstücks 17 eines Sitzes nachgeben, unabhängig davon, ob dieser in Fahrtrichtung oder entgegen der Fahrtrichtung eingesetzt wird. Dabei fährt der Kopf 108 entweder in den Freiraum neben dem Sperrbalken 113 ein oder er wird durch den Sperrbalken 113 gegen den Druck der Schraubenfeder 110 in das Anschlussstück 15 eingedrückt. Eine weitere Schraubenfeder 111 hält das Hakenende 109 an einem Anschlag 112.

Ferner ist in Figur 3 angedeutet, dass der Sperrbolzen 107 in seiner Länge verändert werden kann, da er aus zwei Teilen besteht, die beispielsweise über Gewinde miteinander verbunden sind. Dies ist dann relevant, wenn der Sitz 8 in seiner Höhe verstellt werden soll.

Die Höhe des Sitzes 8 kann erst dann wieder verstellt werden, wenn die Achsen 2.1 und 2.2 in ihre in Figur 4 gezeigte Ausgangslage gebracht werden. Hierzu wird erneut der Betätigungshebel 44 betätigt, d.h. nach oben gehoben. Der Betätigungshebel 44 dreht um die Vertikalachse F. Gleichzeitig wird der Kopf 45 des Rastbolzens 41 und damit der gesamte Rastbolzen 41 nach oben gedrückt. Die Feder 47 wird gespannt und zieht dabei das untere Ende 40 des Rastbolzens 41 mit sich nach oben. Damit gelangt das untere Ende 40 aus dem Eingriff mit dem Raststreifen 39.

Nun kann das gesamte Schubprofil 105 zusammen mit dem Betätigungshebel 44 und dem Rastbolzen 41 in Richtung von dem Aussenrohr 21 weg verschoben werden. Die Sperrgabel 48 gelangt aus ihrem Eingriff mit den Ausnehmungen 49 in dem Aussenrohr 21 bzw. dem Innenrohr 20.Wird nun der Betätigungshebel 44 wieder losgelassen, entspannt sich die Feder 47, zieht über den Kopf 45 den Betätigungshebel 44 wieder nach unten und das untere Ende 40 des Rastbolzens 41 gelangt erneut mit dem Raststreifen 39 in seiner ursprünglichen Position in Eingriff. In dieser Position drücken die Schenkel 36.1 und 36.2 die Achsen 2.1 und 2.2 zusammen mit den Rädern 3.1 und 3.2 wieder nach aussen in ihre Ausgangslage. Nun kann auch der Sitz 8 erneut in seiner Höhe verstellt werden.

Soll das Kind nicht mehr, wie bisher, in Fahrtrichtung der Vorrichtung P₁ in seinem Sitz 8 sitzen, sondern entgegen der Fahrtrichtung, so muss lediglich der Hand- und Schiebegriff 7 von einer Seite auf die andere geschwenkt werden. Hierzu ist dem Hand- und Schiebegriff 7 beidseits eine nicht näher gezeigte Betätigungseinrichtung, z.B. ein Seilzug, zugeordnet. Durch Betätigen dieser Betätigungseinrichtungen ziehen diese jeweils endseitig an einem Verbindungsstück 50, welches in Figur 3 deutlicher zu erkennen ist. Dieses wiederum dreht zunächst andernends um einen Drehbolzen 51, mit welchem es endseits an einem Verriegelungsbügel 52 angeordnet ist. Wird weiterer Zug auf das Verbindungsstück 50 ausgeübt, dreht dieses nicht mehr um den Drehbolzen 51, sondern zieht stattdessen den Verriegelungsbügel 52 mit sich. Der Verriegelungsbügel 52 wiederum dreht dadurch um eine Horizontalachse G. Er löst dadurch seinen Rasthaken 53, welcher auf der dem Verbindungsstück 50 gegenüberliegenden Seite des Verriegelungsbügels 52 angeordnet ist, aus seinem Eingriff mit einer Rastausnehmung 54, die in einem Umfang 55 einer Drehscheibe 56 vorgesehen ist, welche die jeweiligen Enden des Hand- und Schiebegriffes 7 mit dem Gestellrahmen 1 verbindet. Der Hand- und Schiebegriff 7 kann nun um die Horizontalachse D gedreht werden. Die Drehung erfolgt bevorzugt um etwa 90°.

Ist der Hand- und Schiebegriff 7 in seiner gewünschten Position angelangt, rastet der Rasthaken 53 in einer weiteren Rastausnehmung 57 auf dem Umfang 55 der Drehscheibe 56 ein. Die Vorrichtung P1 kann weiter bewegt werden.

Soll der Hand- und Schiebegriff 7 in seine Ausgangslage gemäss Figur 1 zurückbewegt werden, erfolgt derselbe Bewegungsablauf, wie bereits oben dargestellt. Der einzige Unterschied besteht darin, dass der Rasthaken 53 nun aus seinem Eingriff mit der Rastausnehmung 57 gelöst und durch Drehung des Hand- und Schiebegriffes 7 in Eingriff mit der ursprünglichen Rastausnehmung 54 gebracht wird.

Neben den oben bereits beschriebenen Funktionen können ferner die Achsen 2.3 und 2.4 mit den Rädern 3.3 und 3.4 in Richtung der Achsen 2.1 und 2.2 mit ihren Rädern 3.1 und 3.2 verschwenkt werden. Dies kann besonders beim Treppensteigen oder beim Befahren von Kies oder Sand von Vorteil sein, da die Achsen 2.3 und 2.4 verschwenkt werden können, ohne das sich in dem Sitz 8 befindliche Kind herausnehmen zu müssen.

Dem Gestellrahmen 1 ist hierzu mittig zwischen den Achsen 2.3 und 2.4 ein Schwenkmechanismus 58 (siehe Figur 2) zugeordnet. Dieser Schwenkmechanismus 58 weist ein dreieckförmiges Betätigungselement 59 auf. Dessen einer Eckbereich ist zu einem länglichen Hebel 60 ausgeformt. Ein weiterer Eckbereich 61 ist über einen Drehbolzen 62 drehbar mit dem Gestellrahmen 1 verbunden. Von der dritten Eckbereich 63 wiederum ragt ein Bolzen 64 ab, welcher in einer Umfangsausnehmung 65 eines Schwenkelementes 66 eingreift.

Das Schwenkelement 66 ist an einer Drehachse 67 angeordnet, an der beidseits die Achsen 2.3 und 2.4 für die Räder 3.3 und 3.4 befestigt sind. Das Schwenkelement 66 weist darüber hinaus einen Stift 68 auf, welcher in einem Langloch 69 einer Verbindungsscheibe 70 geführt ist, welche wiederum mit dem Gestellrahmen 1 verbunden ist.

Bei einem Betätigen des Hebels 60 in Richtung des Pfeils 71 wird die Eckbereich 61 des dreieckförmigen Betätigungselementes 59 um den

Drehbolzen 62 gedreht. Durch diese Bewegung wird der Bolzen 64 an der Eckbereich 63 aus der Umfangsausnehmung 65 des Schwenkelementes 66 gedrückt. Hierdurch kann das Schwenkelement 66 um eine Horizontalachse H schwenken, wobei es die an einer Drehachse 67 befestigten Achsen 2.3 und 2.4 mit ihren Rädern 3.3 und 3.4 mitnimmt. Der Stift 68 des Schwenkelementes 66 begrenzt dabei die Schwenkbewegung des Schwenkelementes 66 durch seine Führung in dem Langloch 69 der Verbindungsscheibe 70.

Sollen die Achsen 2.3 und 2.4 mit ihren Rädern 3.3 und 3.4 wieder in ihre Ausgangslage zurückbewegt werden, so müssen die Achsen 2.3 und 2.4 und damit die Drehachse 67 bzw. das Schwenkelement 66 lediglich in die entgegengesetzte Richtung gedreht werden, bis das Schwenkelement 66 bzw. seine Umfangsausnehmung 65 erneut mit dem Bolzen 64 des dreieckförmigen Betätigungselementes 59 in Eingriff gelangt. Auf diese Weise sind die Achsen 2.3 und 2.4 wieder in ihrer Ausgangslage verriegelt.

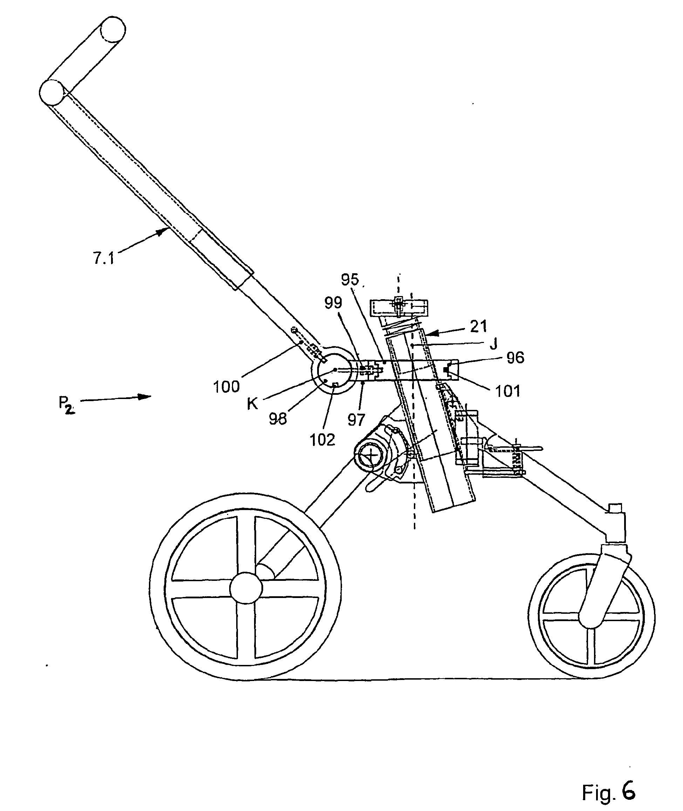

Bei der Vorrichtung P₂ gemäss Figur 6 ist ein weiteres Ausführungsbeispiel eines Hand- und Schiebegriffes 7.1 gezeigt. Der Hand- und Schiebegriff 7.1 ist um eine Vertikalachse J dreh- und eine Horizontalachse K schwenkbar.

An dem Aussenrohr 21 oder dem Innenrohr 20 ist ein Anschlussring 95 mit einer Umfangsnut 96 befestigt. Eine Befestigung des Anschlussringes 95 an dem Innenrohr 20 weist den Vorteil auf, dass bei einer möglichen Verstellung des Sitzes 8 in der Höhe der Anschlussring 95 und damit der Hand- und Schiebegriff 7.1 ebenfalls in der Höhe verstellt werden kann.

In der Umfangsnut 96 dreht ein Drehring 97, an welchem über ein Drehgelenk 98 der Hand- und Schiebegriff 7.1 angeordnet ist. Sowohl dem Drehring 97 als auch dem Hand- und Schiebegriff 7.1 sind erneut federbelastete Rastbolzen 99 bzw. 100 zugeordnet, welche mit entsprechenden Ausnehmung 101 bzw. 102 in der Umfangsnut 96 bzw. dem Drehgelenk 98 in Eingriff gelangen. Bei entsprechender Betätigung der Rastbolzen wird zum einen eine Drehung des Hand- und Schiebegriffes 7.1 um die Vertikalachse J um 360° ermöglicht. Zum anderen kann der Hand- und Schiebegriff 7.1 um die Horizontalachse K geschwenkt werden.

### Bezugszeichenliste

| | | | | | |
|---|---|---|---|---|---|
| 1 | Gestellrahmen | 34 | Aussenseite | 67 | Drehachse |
| 2 | Achse | 35 | Löse- u. Verstellmech. | 68 | Stift |
| 3 | Rad | 36 | Schenkel | 69 | Langloch |
| 4 | Drehbolzen | 37 | Drehbolzen | 70 | Verbindungsscheibe |
| 5 | Drehgelenk | 38 | Drehbolzen | 71 | Pfeil |
| 6 | Drehbolzen | 39 | Raststreifen | | |
| 7 | Hand- u. Schiebegriff | 40 | Ende | | |
| 8 | Sitz | 41 | Rastbolzen | | |
| 9 | Sitzbereich | 42 | Ende | | |
| 10 | Rückenlehnenbereich | 43 | Öffnung | | |
| 11 | Langloch | 44 | Betätigungshebel | | |
| 12 | Führungsstreifen | 45 | Kopf | | |
| 13 | Bolzen | 46 | Oberseite | | |
| 14 | Rastausnehmung | 47 | Feder | | |
| 15 | Anschlussstück | 48 | Sperrgabel | | |
| 16 | Unterseite | 49 | Ausnehmungen | | |
| 17 | Rohrstück | 50 | Verbindungsstück | | |
| 18 | Rastausnehmung | 51 | Drehbolzen | | |
| 19 | Hebel | 52 | Verriegelungsbügel | | |
| 20 | Innenrohr | 53 | Rasthaken | | |
| 21 | Aussenrohr | 54 | Rastausnehmung | | |
| 22 | Feder | 55 | Umfang | | |
| 23 | Oberer Boden | 56 | Drehscheibe | | |
| 24 | Unterer Boden | 57 | Rastausnehmung | | |
| 25 | Schraube | 58 | Schwenkmechanismus | | |
| 26 | Gewinde | 59 | Betätigungselement | | |
| 27 | Öffnung | 60 | Hebel | | |
| 28 | Unterseite | 61 | Eckbereich | | |
| 29 | Betätigungshebel | 62 | Drehbolzen | 95 | Anschlussring |
| 30 | Ausnehmung | 63 | Eckbereich | 96 | Umfangsnut |
| 31 | Rastnase | 64 | Bolzen | 97 | Drehring |
| 32 | Bereich | 65 | Umfangsausnehmung | 98 | Drehgelenk |
| 33 | Feder | 66 | Schwenkelement | 99 | Rastbolzen |
| 100 | Rastbolzen | A | Vertikalachse | | |
| 101 | Ausnehmung | B | Horizontalachse | | |
| 102 | Ausnehmung | C | Vertikalachse | | |
| | | D | Horizontalachse | | |
| 104 | Lasche | E | Horizontalachse | | |
| 105 | Schubprofil | F | Horizontalachse | | |
| 106 | Doppelpfeil | G | Horizontalachse | | |
| 107 | Sperrbolzen | H | Horizontalachse | | |
| 108 | Kopf | | | | |
| 109 | Hakenende | J | Vertikalachse | | |
| 110 | Schraubenfeder | K | Horizontalachse | | |
| 111 | Schraubenfeder | | | | |
| 112 | Anschlag | | | | |
| 113 | Sperrbalken | | | | |
| 114 | Nase | | | | |
| 115 | Unterseite | | | | |
| | | | | | |
| | | | | | |
| | | | | | |
| | | | | | |
| | | | | | |
| | | | | | |
| | | | | | |

## Patentansprüche

1. Vorrichtung zum Bewegen eines Kindes, Säuglings od. dgl. mit einem Gestellrahmen (1), an welchem ein Sitz (8), ein Hand- und Schiebegriff (7, 7.1) sowie zumindest drei Räder (3.1, 3.2, 3.3, 3.4) angeordnet sind, wobei die Räder (3.1, 3.2, 3.3, 3.4) an Achsen (2.1, 2.2, 2.3, 2.4) angeordnet sind, wobei zumindest zwei Achsen (2.1, 2.2, 2.3, 2.4) um eine Vertikalachse (A) bzw. eine Horizontalachse (H) verschwenkbar sind,
**dadurch gekennzeichnet,**
**dass** die Achsen (2.1, 2.2, 2.3, 2.4) über einen Löse- und Verstellmechanismus (35) verbunden sind und/oder dem Gestellrahmen (1) mittig zwischen den Achsen (2.3, 2.4) ein Schwenkmechanismus (58) zugeordnet ist.

2. Vorrichtung nach Anspruch 1, **dadurch gekennzeichnet, dass** die Achsen (2.1, 2.2) über Drehbolzen (4) und die Achsen (2.3, 2.4) über ein Drehgelenk (5) an dem Gestellrahmen (1) befestigt sind.

3. Vorrichtung nach Anspruch 1 oder 2, **dadurch gekennzeichnet, dass** der Löse- und Verstellmechanismus (35) zwei Schenkel (36) aufweist, welche einends über Drehbolzen (37) drehbar mit den Achsen (2.1, 2.2) und andernends über Drehbolzen (38) drehbar mit einem Schubprofil (105) verbunden sind, wobei das Schubprofil (105) mit einem Raststreifen (39) zusammenwirkt, mit dem ein unteres Ende (40) eines Rastbolzens (41) in Eingriff gelangt, wobei ein oberes Ende (42) des Rastbolzens (41) eine Öffnung (43) eines Betätigungshebels (44) durchquert, wobei ein Kopf (45) des Rastbolzens (41) auf einer Oberseite (46) des Betätigungshebels (44) aufliegt, wobei die Schenkel (36) durch Betätigen des Betätigungshebels (44) nach innen bzw. nach aussen schwenkbar sind.

4. Vorrichtung nach Anspruch 3, **dadurch gekennzeichnet, dass** an dem Schubprofil (105) in Richtung des Aussenrohres (21) bzw. des Innenrohres (20) des Gestellrahmens (1) eine Sperrgabel (48) vorgesehen ist, welche mit einer Ausnehmung (49) des Aussenrohres (21) bzw. des Innenrohres (20) in Eingriff gelangt und in das Innere des Innenrohres (20) eingreift und dort mit einem Sperrbolzen (107) im Inneren des Aussen- bzw. Innenrohres (21, 20) zusammenwirkt.

5. Vorrichtung nach Anspruch 4, **dadurch gekennzeichnet, dass** der Sperrbolzen (107) in seiner Länge veränderbar ist.

6. Vorrichtung nach wenigstens einem der Ansprüche 1 bis 5, **dadurch gekennzeichnet, dass** der Schwenkmechanismus (58) ein dreieckförmiges Betätigungselement (59) aufweist, dessen einer Eckbereich zu einem länglichen Hebel (60) ausgeformt ist, wobei von einem dritten Eckbereich (63) des Betätigungselementes (59) ein Bolzen (64) abragt, welcher in einer Umfangsausnehmung (65) eines Schwenkelementes (66) eingreift, welches wiederum an einer Drehachse (67) angeordnet ist, an deren jeweiligen Enden die Achsen (2.3, 2.4) mit ihren Rädern (3.3, 3.4) befestigt sind.

7. Vorrichtung nach wenigstens einem der Ansprüche 1 bis 6, **dadurch gekennzeichnet, dass** der Sitz (8) höhenverstellbar ist.

8. Vorrichtung nach wenigstens einem der Ansprüche 4 bis 7, **dadurch gekennzeichnet, dass** der Sitz (8) in einer Verlängerung des Innenrohres (20) angeordnet ist, welches in dem Aussenrohr (21) des Gestellrahmens (1) geführt ist..

9. Vorrichtung nach Anspruch 8, **dadurch gekennzeichnet, dass** in dem Inneren des Innenrohres (20) bzw. des Aussenrohres (21) eine Feder (22) angeordnet ist, welche zwischen einem oberen Boden (23) des Innenrohres (20) und einem unteren Boden (24) des Aussenrohres (21) verspannt ist und welche über das Gewicht eines sich in dem Sitz (8) befindlichen Kindes, Säuglings od. dgl. einstellbar bzw. vorspannbar ist.

10. Vorrichtung nach Anspruch 9, **dadurch gekennzeichnet, dass** die Feder (22) über eine Schraube (25) einstellbar ist, welche durch eine mit einem entsprechenden Gewinde (26) versehene Öffnung (27) in dem unteren Boden (24) des Aussenrohres (21) geführt ist, und die Schraube (25) im Inneren des Aussenrohres (21) an eine Unterseite (28) des Innenrohres (20) stösst, so dass durch Drehung der Schraube (25) das Innenrohr (20) in dem Aussenrohr (21) bewegbar ist.

11. Vorrichtung nach einem der Ansprüche 8 bis 10, **dadurch gekennzeichnet, dass** das Innenrohr (20) in dem Aussenrohr (21) mittels eines Betätigungshebels (29) festlegbar ist, welcher eine Rastnase (31) aufweist, welche mit Ausnehmungen (30) in dem Aussenrohr (21) bzw. Innenrohr (20) in Eingriff bringbar ist.

12. Vorrichtung nach wenigstens einem der Ansprüche 1 bis 11, **dadurch gekennzeichnet, dass** der Sitz (8) und/oder der Hand- und Schiebegriff (7, 7.1) dreh- und/oder schwenk- bzw. kippbar ist/sind.

13. Vorrichtung nach wenigstens einem der Ansprüche 1 bis 12, **dadurch gekennzeichnet, dass** dem Hand- und Schiebegriff (7) eine Betätigungseinrichtung zugeordnet ist, welche jeweils endseitig mit einem Verbindungsstück (50) verbunden ist.

14. Vorrichtung nach Anspruch 13, **dadurch gekennzeichnet, dass** das Verbindungsstück (50) über einen Drehbolzen (51) mit einem Verriegelungsbügel (52) verbunden ist, welcher um eine Horizontalachse (G) dreht und andernends des Verbindungsstückes (50) einen Rasthaken (53) ausbildet, wobei der Rasthaken (53) mit Ausnehmungen (54, 57) in einem Umfang (55) einer Drehscheibe (56) in Wirkverbindung steht, welche die Enden des Hand- und Schiebegriffes (7) mit dem Gestellrahmen (1) verbindet.

15. Vorrichtung nach wenigstens einem der Ansprüche 4 bis 14, **dadurch gekennzeichnet, dass** an dem Aussenrohr (21) oder dem Innenrohr (20) des Gestellrahmens (1) ein Anschlussring (95) mit einer Umfangsnut (96) angeordnet ist, in welcher ein Drehring (97) dreht, an welchem über ein Drehgelenk (98) der Hand- und Schiebegriff (7.1) angeordnet ist, wobei dem Drehring (97) bzw. dem Hand- und Schiebegriff (7.1) federbelastete Rastbolzen (99, 100) zugeordnet sind, welche mit entsprechenden Ausnehmungen (101, 102) in der Umfangsnut (96) bzw. dem Drehgelenk (98) ein Eingriff bringbar sind.

## Claims

1. Apparatus for moving a child, infant, or the like, comprising a frame (1) on which a seat (8), a gripping and pushing handle (7, 7.1), and at least three wheels (3.1, 3.2, 3.3, 3.4) are arranged, the wheels (3.1, 3.2, 3.3, 3.4) being arranged on axles (2.1, 2.2, 2.3, 2.4), at least two axles (2.1, 2.2, 2.3, 2.4) being pivotable about a vertical axis (A) or a horizontal axis (H), **characterised**
**in that** the axles (2.1, 2.2, 2.3, 2.4) are connected via a releasing and adjusting mechanism (35) and/or a pivoting mechanism (58) is assigned to the frame (1) centrally between the axles (2.3, 2.4).

2. Apparatus according to Claim 1, **characterised in that** the axles (2.1, 2.2) are fastened to the frame (1) via pivot pins (4) and the axles (2.3, 2.4) are fastened to the frame (1) via a pivot joint (5).

3. Apparatus according to Claim 1 or 2, **characterised in that** the releasing and adjusting mechanism (35) has two limbs (36) which, at one end, are rotatably connected to the axles (2.1, 2.2) via pivot pins (37) and, at the other end, are rotatably connected to a sliding profile (105) via pivot pins (38), the sliding profile (105) cooperating with a latching strip (39), with which a lower end (40) of a latching bolt (41) engages, an upper end (42) of the latching bolt (41) passing through an opening (43) of an actuating lever (44), a head (45) of the latching bolt (41) resting on an upper side (46) of the actuating lever (44), the limbs (36) being inwardly and outwardly pivotable by actuation of the actuating lever (44).

4. Apparatus according to Claim 3, **characterised in that** a locking fork (48) is provided on the sliding profile (105) in the direction of the outer tube (21) and the inner tube (20) of the frame (1), the locking fork (48) engaging with a cutout (49) of the outer tube (21) and the inner tube (20) and engaging in the interior of the inner tube (20) and cooperating there with a locking bolt (107) in the interior of the outer and inner tube (21, 20).

5. Apparatus according to Claim 4, **characterised in that** the locking bolt (107) is variable in length.

6. Apparatus according to one of Claims 1 to 5, **characterised in that** the pivoting mechanism (58) has a triangular actuating element (59), one corner region of which is shaped to form an elongated lever (60), a pin (64) projecting from a third corner region (63) of the actuating element (59) and engaging in a circumferential cutout (65) of a pivoting element (66), which in turn is arranged on a pivot shaft (67), to the respective ends of which the axles (2.3, 2.4) with their wheels (3.3, 3.4) are fastened.

7. Apparatus according to at least one of Claims 1 to 6, **characterised in that** the seat (8) is height-adjustable.

8. Apparatus according to at least one of Claims 4 to 7, **characterised in that** the seat (8) is arranged in an extension of the inner tube (20), the latter being guided in the outer tube (21) of the frame (1).

9. Apparatus according to Claim 8, **characterised in that** a spring (22) is arranged in the interior of the inner tube (20) and the outer tube (21), the spring (22) being clamped between an upper base (23) of the inner tube (20) and a lower base (24) of the outer tube (21) and being adjustable or preloadable via the weight of a child, infant or the like situated in the seat (8).

10. Apparatus according to Claim 9, **characterised in that** the spring (22) is adjustable via a screw (25) which is passed through an opening (27), provided with a corresponding thread (26), in the lower base (24) of the outer tube (21), and the screw (25) butts against a lower side (28) of the inner tube (20) in the interior of the outer tube (21), so that the inner tube (20) is movable in the outer tube (21) by rotation of the screw (25).

11. Apparatus according to one of Claims 8 to 10, **characterised in that** the inner tube (20) can be fixed in the outer tube (21) by means of an actuating lever (29) which has a latching nose (31) which can be brought into engagement with cutouts (30) in the outer tube (21) and inner tube (20).

12. Apparatus according to at least one of Claims 1 to 11, **characterised in that** the seat (8) and/or a gripping and pushing handle (7, 7.1) is/are rotatable and/or pivotable or tiltable.

13. Apparatus according to at least one of Claims 1 to 12, **characterised in that** an actuating device which is connected in each case at the end to a connecting piece (50) is assigned to the gripping and pushing handle (7).

14. Apparatus according to Claim 13, **characterised in that** the connecting piece (50) is connected via a pivot pin (51) to a locking shackle (52) which rotates about a horizontal axis (G) and at the other end of the connecting piece (50) forms a latching hook (53), the latching hook (53) being operatively connected to cutouts (54, 57) in a circumference (55) of a rotary disc (56) which connects the ends of the gripping and pushing handle (7) to the frame (1).

15. Apparatus according to at least one of Claims 4 to 14, **characterised in that** a connecting ring (95) with a circumferential groove (96) is arranged on the outer tube (21) or the inner tube (20), in which groove rotates a rotary ring (97) on which the gripping and pushing handle (7.1) is arranged via a pivot joint (98), spring-loaded latching bolts (99, 100) being assigned to the rotary ring (97) and the gripping and pushing handle (7.1), respectively, and being engageable with corresponding cutouts (101, 102) in the circumferential groove (96) and the pivot joint (98), respectively.

## Revendications

1. Dispositif pour déplacer un enfant, un nouveau-né ou autre, avec un châssis (1) sur lequel sont disposés un siège (8), une poignée manuelle et coulissante (7, 7.1) ainsi qu'au moins trois roues (3.1, 3.2, 3.3, 3.4), les roues (3.1, 3.2, 3.3, 3.4) étant disposées sur des axes (2.1, 2.2, 2.3, 2.4), au moins deux axes (2.1, 2.2, 2.3, 2.4) étant pivotables autour d'un axe vertical (A) ou d'un axe horizontal (H), **caractérisé par le fait**
**que** les axes (2.1, 2.2, 2.3, 2.4) sont connectés par l'intermédiaire d'un mécanisme de dégagement ou de déplacement (35) et/ou qu'au châssis (1) est associé un mécanisme de pivotement (58) au centre entre les axes (2.3, 2.4).

2. Dispositif selon la revendication 1, **caractérisé par le fait que** les axes (2.1, 2.2) sont fixés par l'intermédiaire de boulons rotatifs (4) et les axes (2.3, 2.4) par l'intermédiaire d'une articulation rotative (5) au châssis (1).

3. Dispositif selon la revendication 1 ou 2, **caractérisé par le fait que** le mécanisme de dégagement ou de déplacement (35) présente deux branches (36) qui sont connectées, à une extrémité, par l'intermédiaire de boulons rotatifs (37) de manière rotative aux axes (2.1, 2.2) et, à l'autre extrémité, par l'intermédiaire de boulons rotatifs (38) de manière rotative à un profilé coulissant (105), le profilé coulissant (105) coopérant avec une tringle d'arrêt (39) avec laquelle arrive en prise une extrémité inférieure (40) d'un boulon d'arrêt (41), une extrémité supérieure (42) du boulon d'arrêt (41) traversant une ouverture (43) d'un levier d'actionnement (44), une tête (45) du boulon d'arrêt (41) s'appuyant sur une face supérieure (46) du levier d'actionnement (44), les branches (36) étant pivotables vers l'intérieur ou vers l'extérieur par actionnement du levier d'actionnement (44).

4. Dispositif selon la revendication 3, **caractérisé par le fait qu'**au profilé coulissant (105) est prévue, en direction du tube extérieur (21) ou du tube intérieur (20) du châssis (1), une fourche de blocage (48) qui entre en prise avec un évidement (49) du tube extérieur (21) ou du tube intérieur (20) et qui pénètre à l'intérieur du tube intérieur (20) et y coopère avec un boulon de blocage (107) à l'intérieur du tube extérieur ou du tube intérieur (21, 20).

5. Dispositif selon la revendication 4, **caractérisé par le fait que** le boulon de blocage (107) est variable en longueur.

6. Dispositif selon au moins l'une des revendications 1 à 5, **caractérisé par le fait que** le mécanisme de pivotement (58) présente un élément d'actionnement triangulaire (59) dont une zone de coin est façonnée de manière à former un levier allongé (60), d'une troisième zone de coin (63) de l'élément d'actionnement (59) ressortant un boulon (64) qui s'engage dans un évidement périphérique (65) d'un élément de pivotement (66) qui est, à son tour, disposé sur un axe rotatif (67) aux extrémités respectives duquel sont fixés les axes (2.3, 2.4) avec leurs roues (3.3, 3.4).

7. Dispositif selon au moins l'une des revendications 1 à 6, **caractérisé par le fait que** le siège (8) est réglable en hauteur.

8. Dispositif selon au moins l'une des revendications 4 à 7, **caractérisé par le fait que** le siège (8) est disposé dans un prolongement du tube intérieur (20) qui est guidé dans le tube extérieur (21) du châssis (1).

9. Dispositif selon la revendication 8, **caractérisé par le fait qu'**à l'intérieur du tube intérieur (20) ou du tube extérieur (21) est disposé un ressort (22) qui est tendu entre un fond supérieur (23) du tube intérieur (20) et un fond inférieur (24) du tube extérieur (21) et qui peut être réglé ou prétendu par l'intermédiaire du poids d'un enfant, nouveau-né ou autre se trouvant dans le siège (8).

10. Dispositif selon la revendication 9, **caractérisé par le fait que** le ressort (22) est réglable par l'intermédiaire d'une vis (25) qui est guidée à travers une ouverture (27), pourvue d'un taraudage (26) correspondant, dans le fond inférieur (24) du tube extérieur (21), et la vis (25) se heurtant à l'intérieur du tube extérieur (21) contre une face inférieure (28) du tube intérieur (20), de sorte que, par rotation de la vis (25), le tube intérieur (20) puisse être déplacé dans le tube extérieur (21).

11. Dispositif selon l'une des revendications 8 à 10, **caractérisé par le fait que** le tube intérieur (20) peut être fixé dans le tube extérieur (21) au moyen d'un levier d'actionnement (29) qui présente un doigt d'arrêt (31) pouvant être amené en prise avec des évidements (30) dans le tube extérieur (21) ou le tube intérieur (20).

12. Dispositif selon au moins l'une des revendications 1 à 11, **caractérisé par le fait que** le siège (8) et/ou la poignée manuelle ou coulissante (7, 7.1) est/sont rotatif(s) et/ou pivotrable(s) et/ou basculable(s).

13. Dispositif selon au moins l'une des revendications 1 à 12, **caractérisé par le fait qu'**à la poignée manuelle et coulissante (7) est associé un dispositif d'actionnement qui est connecté, à chaque extrémité, à un connecteur (50).

14. Dispositif selon la revendication 13. **caractérisé par le fait que** le connecteur (50) est connecté, par l'intermédiaire d'un boulon rotatif (51), à un étrier de verrouillage (52) qui tourne autour d'un axe horizontal (G) et formant, à l'autre extrémité du connecteur (50), un crochet d'arrêt (53), le crochet d'arrêt (53) étant en connexion active avec des évidements (54, 57) dans un pourtour (55) d'un disque rotatif (56) qui relie les extrémités de la poignée manuelle et coulissante (7) au châssis (1).

15. Dispositif selon au moins l'une des revendications 4 à 14, **caractérisé par le fait que** sur le tube extérieur (21) ou le tube intérieur (20) du châssis (1) est disposée une bague de raccordement (95) à rainure périphérique (96) dans laquelle tourne une bague rotative (97) sur laquelle est disposée, par l'intermédiaire d'une articulation rotative (98), la poignée manuelle et coulissante (7.1), à la bague rotative (97) ou à la poignée manuelle et coulissante (7.1) étant associés des boulons d'arrêt soumis à une force de ressort (99, 100) et pouvant être amenés en prise avec des évidements (101, 102) correspondants dans la rainure périphérique (96) ou dans l'articulation rotative (98).
